(19) Europäisches Patentamt
European Patent Office
Office européen des brevets

(11) Veröffentlichungsnummer: **0 034 118**
**B1**

(12) # EUROPÄISCHE PATENTSCHRIFT

(45) Veröffentlichungstag der Patentschrift: **06.02.85**

(51) Int. Cl.[4]: **C 07 C 149/18**, C 07 F 7/22, C 08 K 5/37, C 10 M 101/00, C 09 K 15/32

(21) Anmeldenummer: **81810027.3**

(22) Anmeldetag: **02.02.81**

(54) **Neue Metallmercaptide von Estern von beta-Mercaptoalkanolen, ihre Verwendung als Stabilisatoren und mit ihnen stabilisierte organische Materialien.**

(30) Priorität: **08.02.80 CH 1036/80**

(43) Veröffentlichungstag der Anmeldung: **19.08.81 Patentblatt 81/33**

(45) Bekanntmachung des Hinweises auf die Patenterteilung: **06.02.85 Patentblatt 85/6**

(84) Benannte Vertragsstaaten: **BE DE FR GB IT NL**

(56) Entgegenhaltungen:
**FR - A - 2 369 287**
**US - A - 2 870 182**
**US - A - 4 126 627**

(73) Patentinhaber: **CIBA-GEIGY AG, Postfach, CH-4002 Basel (CH)**

(72) Erfinder: **Knobloch, Gerrit, Dr., Luisenweg 2, D-6145 Lindenfels/Odenwald (DE)**
Erfinder: **Wehner, Wolfgang, Dr., Wetzbach 34, D-6144 Zwingenberg (DE)**
Erfinder: **Wirth, Hermann O., Dr., Lessingstrasse 24, D-6140 Bensheim 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue Metallmercaptide von Mercaptoalkanolestern sterisch gehinderter Phenol(alkan)carbonsäuren, ein Verfahren zu ihrer Herstellung und ihre Verwendung als Stabilisatoren für organische Materialien.

Es ist bekannt, dass Metallmercaptide, insbesondere Mono-und Diorganozinnmercaptide gute Thermostabilisatoren für PVC sind. Beispiele hierfür sind Dialkylzinn-di(alkylthioglycolate) wie z.B. die Verbindung $(C_8H_{17})_2Sn(SCH_2COO\text{-}i\text{-}C_8H_{17})_2$ die unter dem Namen «Irgastab 17 MOK» im Handel erhältlich ist, oder aliphatische Carbonsäureester von Dialkylzinn-hydroxyäthylmercaptiden, wie sie im US-Patent 2 870 182 geoffenbart sind, beispielsweise die Verbindung $(C_4H_9)_2Sn(SCH_2CH_2OOC\text{–}C_8H_{17})_2$.

Ersetzt man in diesem letzteren Verbindungstyp den aliphatischen Carbonsäurerest durch den Rest einer sterisch gehinderten Phenol(alkan)-carbonsäure, so ist zu erwarten, dass die Verbindungen zusätzlich zu ihrer Wirkung als PVC-Stabilisatoren noch eine antioxidative Wirkung aufweisen. Überraschend wurde jedoch gefunden, dass die phenolischen Ester gegenüber den bekannten Fettsäureestern nicht nur zusätzliche antioxidative Wirkung zeigen, sondern auch in der thermischen Stabilisierung von PVC überlegene Wirkung besitzen. Im Vergleich zu den vorhin erwähnten bekannten Mercaptiden von Thioglycolsäureestern zeichnen sich die neuen Verbindungen durch eine bessere Lagerstabilität aus.

Gegenstand der Erfindung sind daher Verbindungen der Formel I oder Ia,

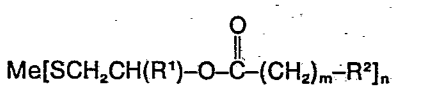 (I)

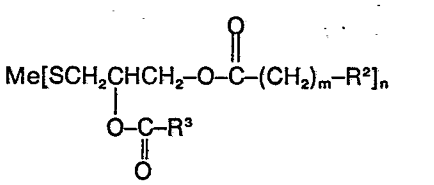 (Ia)

worin m 0, 1 oder 2 und n eine ganze Zahl von 1 bis 4 bedeutet, $R^1$ Wasserstoff, $C_1$–$C_{10}$-Alkyl,

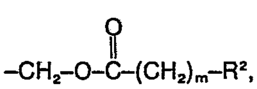, 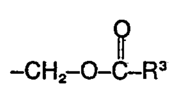

oder $-CH_2OR^4$ bedeutet,

$R^2$ eine Gruppe der Formel 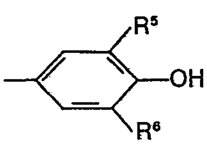 darstellt,

$R^3$ $C_1$–$C_{18}$-Alkyl, $CH_3COCH_2$–, Phenyl $COCH_2$–, Phenyl, $C_7$–$C_9$-Phenylalkyl, Vinyl oder α-Methylvinyl bedeutet,

$R^4$ $C_1$–$C_{18}$-Alkyl, Cyclohexyl oder Benzyl ist,

$R^5$ und $R^6$ $C_1$–$C_8$-Alkyl bedeuten und

Me ein n-wertiges Metall-, Oxometall-, Alkoxymetall- oder Organometall-Kation aus der 1. bis 5. Gruppe des Periodensystems ist.

Bevorzugt sind die Verbindungen der Formel I.

Beispiele für mercaptid-bildende Kationen Me sind $Na^+$, $K^+$, $Mg^{2+}$, $Ca^{2+}$, $Ba^{2+}$, $Zn^{2+}$, $Cd^{2+}$, $Al^{3+}$, $Sn^{4+}$, $R^7Sn^{3+}$, $(R^7)_2Sn^{2+}$, $(R^7)_3Sn^+$, $TiO^{2+}$, $(R^8O)_2Ti^{2+}$, $ZrO^{2+}$, $(R^8O)_2Zr^{2+}$, $VO^{3+}$ oder $Sb^{3+}$, wobei

$R^7$ $C_1$–$C_{12}$-Alkyl oder Phenyl bedeutet und

$R^8$ $C_1$–$C_{10}$-Alkyl ist.

Bevorzugt ist Me eines der Kationen $Mg^{2+}$, $Ca^{2+}$, $Ba^{2+}$, $Zn^{2+}$, $R^7Sn^{3+}$, $(R^7)_2Sn^{2+}$ oder $Sb^{3+}$, insbesondere eines der Kationen $R^7Sn^{3+}$, $(R^7)_2Sn^{2+}$ oder $Sb^{3+}$.

Der Rest $R^2$ ist ein sterisch gehinderter Phenolrest. Auch der Substituent $R^1$ kann einen sterisch gehinderten Phenolrest $R^2$ enthalten. Bevorzugt ist $R^1$ jedoch Wasserstoff.

Der Index m kann 0, 1 oder 2 sein, bevorzugt ist er jedoch 2. Die Alkylgruppen $R^5$ und $R^6$ können unverzweigt oder verzweigt sein, wie z.B. Methyl, Äthyl, Isopropyl, tert. Butyl, n-Butyl, Isoamyl, n-Hexyl, 2-Äthylhexyl oder 1,1,3,3-Tetramethylbutyl. Bevorzugt ist wenigstens einer der beiden Reste ein verzweigter Alkylrest, besonders bevorzugt sind beide Reste tert. Butyl oder einer der Reste Methyl und der andere tert. Butyl.

$R^1$, $R^3$, $R^4$, $R^7$, $R^8$ als Alkyl können unverzweigte oder verzweigte Alkylreste sein wie z.B. Methyl, Äthyl, Isopropyl, Butyl, Hexyl, 2-Äthylbutyl, 2-Äthylhexyl, n-Octyl oder n-Decyl.

$R^3$, $R^4$ und $R^7$ als Alkyl können darüber hinaus auch Undecyl oder Dodecyl sein. $R^3$ und $R^4$ können auch höheres Alkyl wie z.B. Tetradecyl, Hexadecyl oder Octadecyl sein.

$R^3$ als Phenylalkyl kann z.B. Benzyl, Phenyläthyl oder Phenylpropyl sein.

Beispiele für einzelne Verbindungen der Formel I sind die Verbindungen der folgenden Formeln (+ bedeutet darin t-butyl):

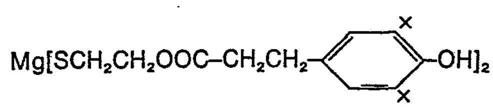

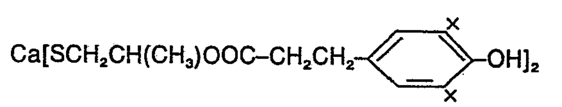

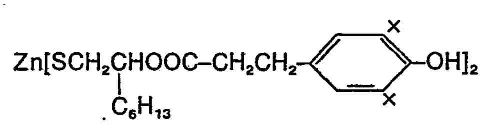

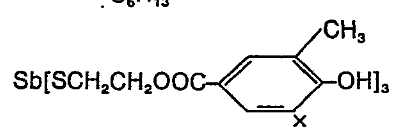

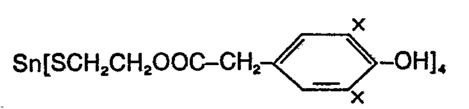

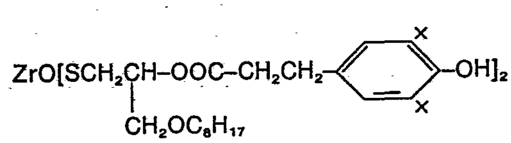

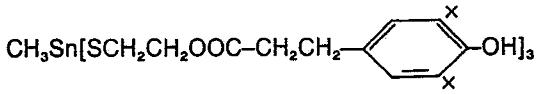

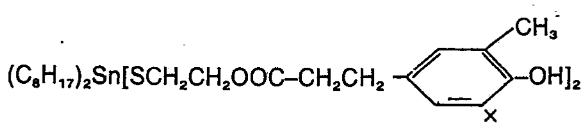

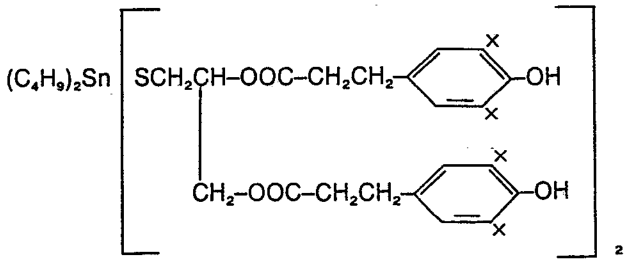

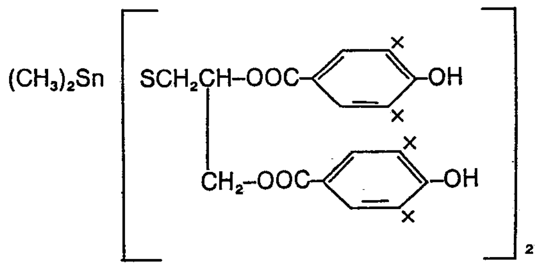

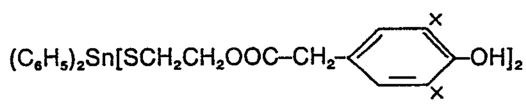

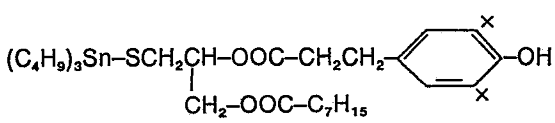

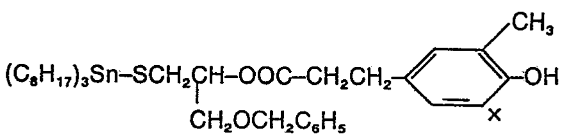

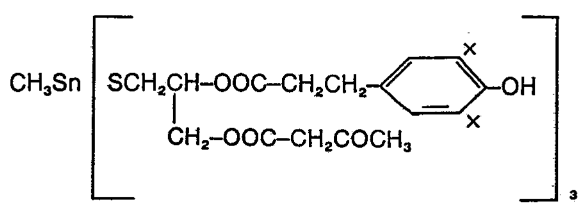

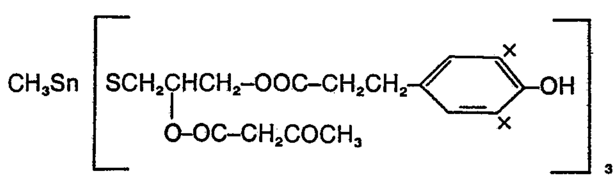

Beispiele für einzelne Verbindungen der Formel Ia sind Verbindungen der folgenden Formeln:

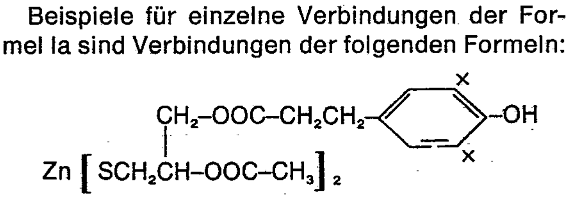

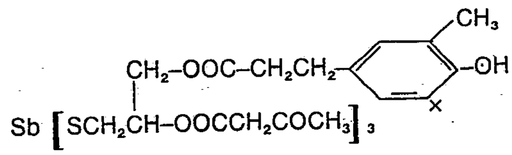

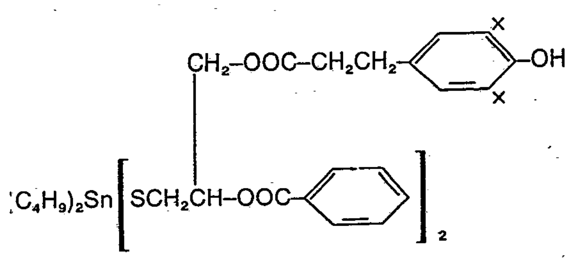

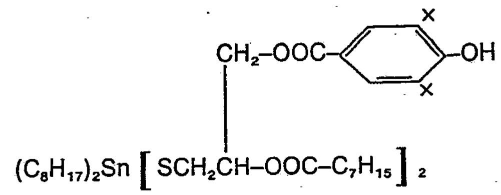

Die Metallmercaptide der Formel I können aus den entsprechenden Mercaptanen der Formel II

$$HS-CH_2-CH(R^1)-OCC-(CH_2)_m-R^2 \quad (II)$$

durch Umsetzung mit wasserfreien Metallchloriden der Formel $MeCl_n$ oder mit Metallalkoholaten $Me(OR^8)_n$ hergestellt werden, wobei $R^8$ einen $C_1-C_{10}$-Alkylrest bedeutet.

Die Metallmercaptide der Formel Ia können in derselben Weise aus den entsprechenden Mercaptanen der Formel IIa

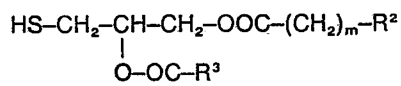
(IIa)

hergestellt werden.

Bei der Umsetzung von II oder IIa mit Metallchloriden setzt man HCl-Akzeptoren zu, wie z.B. Alkali- oder Erdalkali-hydroxide, -oxide, -carbonate oder -amide oder tertiäre Amine, wie z.B. Triäthylamin, Triäthanolamin oder Pyridin. Man arbeitet hierbei bevorzugt in einem organischen Lösungsmittel, in dem das sich bildende Alkalichlorid, Erdalkalichlorid oder Amin-Hydrochlorid schwer löslich ist, jedoch das Metallmercaptid der Formel I gut löslich ist, so dass es sich am Ende der Reaktion durch Filtration leicht von den Chloriden abtrennen lässt. Beispiele für verwendbare Lösungsmittel sind Kohlenwasserstoffe wie z.B. Benzol oder Xylol, chlorierte Kohlenwasserstoffe, wie z.B. Chloroform oder Methylenchlorid, oder Äther wie z.B. Diäthyläther, Dibutyläther, Tetrahydrofuran oder Dioxan. Beispiele für Metallchloride, die hierfür verwendet werden können, sind $ZnCl_2$, $CdCl_2$, $SnCl_4$, $CH_3SnCl_3$, $(C_8H_{17})_2SnCl_2$, $(C_4H_9)_3SnCl$, $VOCl_3$, $TiOCl_2$ oder $SbCl_3$.

Die Umsetzung von II oder IIa mit Metallalkoholaten kann mit oder ohne Lösungsmittel ausgeführt werden, bevorzugt arbeitet man ohne Lösungsmittel. Der sich bildende Alkohol $R^8OH$ kann laufend abdestilliert werden, wodurch man den Verlauf der Reaktion kontrollieren kann. Beispiele für Alkoholate, die hierfür verwendet werden können, sind $NaOC_2H_5$, $KO\text{-}t\text{-}C_4H_9$, $Mg(O\text{-}i\text{-}C_3H_7)_2$, $Al(OC_4H_9)_3$, $C_8H_{17}Sn(OC_2H_5)_3$, $(C_4H_9)_2Sn(OC_4H_9)_2$, $Ti(OC_2H_5)_4$, $Zr(OC_3H_7)_4$ oder $VO(OC_2H_5)_3$.

Die als Ausgangsmaterial verwendeten Mercaptane der Formel II sind z.T. bekannte, z.T. neue Verbindungen.

Verbindungen der Formel II, worin $R^1$ Wasserstoff oder Alkyl ist, sind in der DE-OS 1 948 570 beschrieben. Sie können durch Veresterung eines Mercaptoalkanols $HS\text{–}CH_2CH(R^1)\text{–}OH$ mit einer phenolischen Carbonsäure $R^2\text{–}(CH_2)_m\text{–}COOH$ oder dessen Derivat, wie z.B. Alkylester oder Säurechlorid hergestellt werden.

Verbindungen der Formel II, worin $R^1$ ein Rest $\text{–}CH_2\text{–}OOC\text{–}(CH_2)_m\text{–}R^2$ ist, sind neue Verbindungen. Sie können durch Veresterung von 1-Thioglycerin, $HS\text{–}CH_2\text{–}CH(OH)\text{–}CH_2OH$, mit 2 Äquivalenten einer phenolischen Carbonsäure $R^2\text{–}(CH_2)_m\text{–}COOH$ oder dessen esterbildenden Derivates hergestellt werden. Diese Verbindungen können auch als Stabilisatoren für organische Materialien verwendet werden.

Verbindungen der Formel II, worin $R^1$ ein Rest $\text{–}CH_2\text{–}OOC\text{–}R^3$ oder $\text{–}CH_2\text{–}OR^4$ ist, sind ebenfalls neue Verbindungen. Sie können aus Glycidylestern

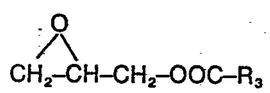

oder Glycidyläthern

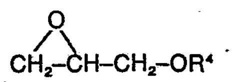

durch Umsetzung mit $H_2S$ und anschliessende Veresterung der Mercaptoalkanole mit $R^2\text{–}(CH_2)_m\text{–}COOH$ oder einem esterbildenden Derivat davon hergestellt werden.

Die Verbindungen der Formel IIa sind ebenfalls neue Verbindungen. Sie können aus Glycidylestern der Formel

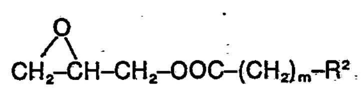

durch Umsetzung mit $H_2S$ und anschliessende Veresterung der Mercaptoalkohole mit $R_3\text{–}COOH$ oder einem esterbildenden Derivat davon hergestellt werden.

Die nach den angegebenen Verfahren hergestellten Mercaptide der Formel I oder Ia sind in roher Form ölige, wachsartige oder feste Materialien. Sie sind in vielen organischen Lösungsmitteln löslich, wie z.B. in Alkoholen, Ketonen oder in Dimethylformamid.

Die Verbindungen der Formel I und Ia sind als Stabilisatoren für organische Materialien verwendbar. Dies betrifft alle Materialien, die durch thermisch-oxydative Alterung geschädigt werden können, wie z.B. Fette, Öle, Wachse, Schmiermittel, Kautschuke, Kunststoffe oder Lacke. Insbesondere sind sie für die Stabilisierung von chlorhaltigen Thermoplasten, von Elastomeren und von Schmiermitteln verwendbar.

Chlorhaltige Thermoplaste sind z.B. Polymerisate von Vinylchlorid oder Vinylidenchlorid und deren Copolymerisate mit chlorfreien Monomeren, ferner chlorierte Polyolefine oder chlorierter Kautschuk. Von besonderer Bedeutung ist die Stabilisierung von Polyvinylchlorid (PVC) und Copolymerisaten des Vinylchlorides. Diese Substrate können Suspensions-, Masse- oder Emulsionspolymerisate sein. Beispiele für Vinylchlorid-Copolymerisate sind insbesondere solche mit Vinylacetat. Das PVC kann Weich-PVC oder Hart-PVC sein. Bevorzugt ist die Stabilisierung von Hart-PVC.

Der Zusatz der Verbindungen der Formel I oder Ia zu den chlorhaltigen Thermoplasten erfolgt in einer Menge von 0,1 bis 5 Gew.-% bezogen auf die Thermoplasten. Bevorzugt verwendet man 0,5–2 Gew.-%.

Besonders geeignet für die Stabilisierung von chlorhaltigen Thermoplasten sind Verbindungen der Formel I, worin Me ein Kation $R^7Sn^{3+}$ oder $(R^7)_2Sn^{2+}$ ist.

Das Einarbeiten der erfindungsgemässen Stabilisatoren in die polymeren Substrate kann nach den üblichen Verfahren zur Einarbeitung von Additiven in Thermoplaste geschehen, beispielsweise durch Vermischen in Pulverform und anschliessende formgebende Verarbeitung oder durch Zugabe auf einem Walzenstuhl oder in einem Mischwerk geschehen. Gleichzeitig können hierbei andere Zusätze eingearbeitet werden wie sie in der Technologie chlorhaltiger Thermoplaste gebräuchlich sind, beispielsweise Gleitmittel, Weichmacher, Füllstoffe, Schlagfest-Zusätze, Pigmente, Lichtstabilisatoren, Antioxydantien oder weitere Thermostabilisatoren. Beispiele für mitverwendete Stabilisatoren sind Metall-stearate und organische Phosphite.

Die erfindungsgemäss stabilisierten chlorhaltigen Thermoplaste können nach den dafür gebräuchlichen Methoden formgebend verarbeitet werden, beispielsweise durch Extrusion, Spritzgiessen, Kalandrieren oder durch Verarbeitung als Plastisole. Ein besonders wichtiges Anwendungsgebiet ist die Extrusion von Profilen und Rohren.

Die Verbindungen der Formel I und Ia können weiterhin als Stabilisatoren für Elastomere verwendet werden, wobei sie vor allem als Antioxydantien wirken. Beispiele für Elastomere sind Naturkautschuk, Polybutadien, Butadien-Copolymere (wie Styrol- oder Acrylnitril-Copolymere), Polyisopren, Polychloropren, Butylkautschuk, EPDM-Kautschuk, SBS- und SIS-Block-Copolymere (thermoplastische Elastomere) sowie deren Gemische (Polyblends) miteinander oder mit anderen Polymeren.

Besonders geeignet für die Stabilisierung von Elastomeren sind die Verbindungen der Formel I, worin Me ein Kation $R^7Sn^{3+}$ oder $(R^7)_2Sn^{2+}$ ist.

Die stabilisierende Wirkung der Verbindungen der Formel I oder Ia auf solche Elastomere äussert sich in einer erhöhten Beständigkeit gegen Abbau oder Verfärbung während der Trocknung, Lagerung und Compoundierung der Roh-Elastomeren sowie bei der formgebenden Verarbeitung des Compounds als auch in einer erhöhten Alterungsbeständigkeit der aus den stabilisierten Elastomeren erzeugten Gegenstände.

Die hierzu benötigten Mengen hängen vom verwendeten Elastomer und dem beabsichtigten Verwendungszweck ab. Im allgemeinen benötigt man 0,01 bis 2 Gew.-% des Stabilisators der Formel I oder Ia, bezogen auf das Elastomer, insbesondere 0,05% bis 0,5%.

Die Einarbeitung erfolgt nach den für Kautschuk-Additive bekannten Methoden, vorzugsweise durch Zugabe in gelöster Form zur Kautschuk-Lösung oder in emulgierter Form zum Latex nach Beendigung der Polymerisation, oder während des Compoundierens im Innenmischer oder auf dem Walzwerk, gegebenenfalls zusammen mit anderen Stabilisatoren und Kautschuk-Additiven.

Die Verbindungen der Formel I und Ia können auch als Schmiermittel-Zusätze verwendet werden. Die Schmiermittel können Schmieröle oder Schmierfette auf Basis natürlicher oder synthetischer Öle sein.

Von besonderer Bedeutung sind die für Kraftfahrzeuge und Flugzeuge verwendeten Schmieröle.

Die Wirkung der Verbindungen der Formel I und Ia äussert sich in einer Herabsetzung des Verschleisses und der Metallkorrosion sowie in einer Stabilisierung des Schmiermittels gegen Oxidation und somit einer längeren Gebrauchsdauer der damit stabilisierten Schmiermittel.

Die hierfür erforderlichen Mengen betragen, je nach dem gewünschten Effekt, 0,1 bis 3 Gew.-% der Verbindung der Formel I oder Ia, bezogen auf das Schmiermittel.

Besonders geeignet für die Stabilisierung von Schmiermitteln sind die Verbindungen der Formel I, worin Me ein Kation $R^7Sn^{3+}$ darstellt.

Die nachfolgenden Beispiele illustrieren im Detail die Herstellung und Verwendung der Verbindungen der Formel I. Teile bedeuten darin Gewichtsteile, die Temperaturen sind in °C angegeben.

Beispiel 1:

14 g Di-n-octyl-zinndichlorid und 23,7 g β-(3,5-Di-tert-butyl-4-hydroxyphenyl)-propionsäure-2-mercaptoäthylester

werden in 100 ml Chloroform gelöst. Nun gibt man portionenweise unter gelindem Erwärmen 8,4 g $NaHCO_3$ zu, wobei sich $CO_2$ entwickelt. Anschliessend wird das gebildete Reaktionswasser durch azeotrope Destillation entfernt. Die Reaktionslösung wird filtriert und im Vakuum eingedampft. Es werden 36,4 g eines gelben Öles erhalten, das die rohe Verbindung der Formel

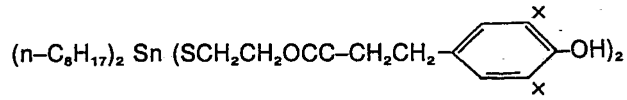

darstellt (Verbindung Nr. 1).

Analyse:

Sn berechnet 11,6%, gefunden 11,3%

S berechnet 6,3%, gefunden 6,2%.

Das NMR-Spektrum stimmt mit der angenommenen Struktur überein.

In analoger Weise werden die folgenden Verbindungen hergestellt:

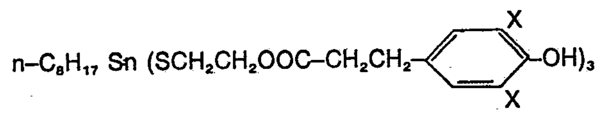

(Verbindung Nr. 2) glasig-spröder Feststoff

Analyse:

Sn ber. 9,5%, gef. 9,1%, S ber. 7%, gef. 7,3%

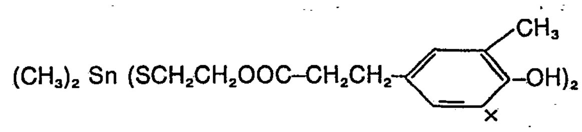

(Verbindung Nr. 3) hochviskoses Öl

Analyse:

Sn ber. 16,0%, gef. 15,8%

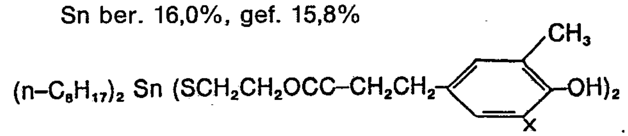

(Verbindung Nr. 4) hochviskoses Öl

Analyse:

Sn ber. 12,7%, gef. 12,6%

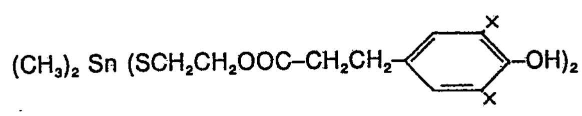

(Verbindung Nr. 5) glasig-spröder Feststoff

Analyse:

Sn ber. 14,4%, gef. 14,0%

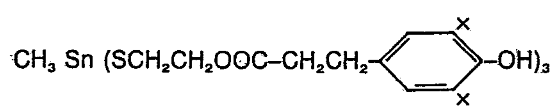

(Verbindung Nr. 6) glasig-spröder Feststoff

Analyse:

Sn ber. 10,4%, gef. 9,9%

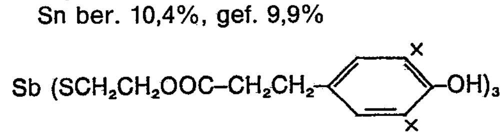

(Verbindung Nr. 7) glasig-spröder Feststoff

Analyse:

Sn ber. 10,7%, gef. 10,2% – S ber. 8,5%, gef. 8,2%

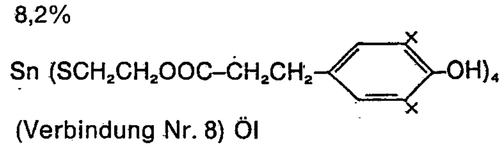

(Verbindung Nr. 8) Öl

Analyse:

Sn ber. 8,1%, gef. 7,9% – S ber. 8,7%, gef. 8,3%.

Beispiel 2:

9,2 g wasserfreies Zinkchlorid werden in 200 ml Tetrahydrofuran suspendiert. Zu dieser Suspension fügt man 20,2 g Triäthylamin und lässt dann unter Rühren eine Lösung von 47,4 g β-(3,5-Di-tert-butyl-4-hydroxyphenyl)-propionsäure-2-mercaptoäthylester in 200 ml Tetrahydrofuran zutropfen. Das Reaktionsgemisch wird 8 Std. zum Rückfluss erhitzt. Im Vakuum wird der Grossteil des Chloroforms abdestilliert und der Rückstand mit 500 ml Diäthyläther versetzt. Das ausgefallene Amin-hydrochlorid wird abfiltriert und das Filtrat eingedampft. Es hinterbleiben 49,6 g des rohen Produktes der Formel

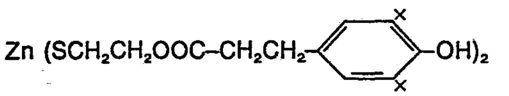

das bei Raumtemperatur eine wachsartige Konsistenz besitzt (Verbindung Nr. 9).

Analyse:

Zn berechnet 8,9%, gefunden 8,4% – S ber. 8,7%, gef. 8,3%

Nach derselben Methode wird hergestellt

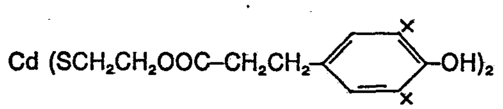

(Verbindung Nr. 10) wachsartiger Feststoff

Analyse:

Cd ber. 14,3%, gef. 13,9% – S ber. 8,2%, gef. 7,9%.

Beispiel 3:

8,2 g Zirkon-tetrapropylat und 16,9 g β-(3,5-Di-tert-butyl-4-hydroxyphenyl)-propionsäure-2-mercaptoäthylester werden unter Rühren 1½ Std. auf 150° erhitzt, unter Abdestillieren des entstehenden Äthanols. Es wurden 3 g Destillat erhalten. Das flüssige Reaktionsprodukt wird im Vakuum von flüchtigen Bestandteilen befreit und über Kieselerde filtriert. Man erhält 20 g einer gelblichen Flüssigkeit, dessen NMR-Spektrum der Formel

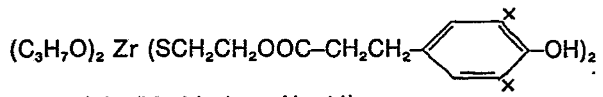

entspricht (Verbindung Nr. 11).

Analyse:

Zr ber. 10,3%, gef. 9,9% – S ber. 7,3%, gef. 6,9%.

In analoger Weise wurden hergestellt:

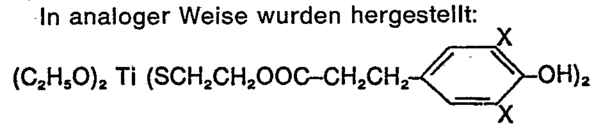

aus Ti $(OC_2H_5)_4$

(Verbindung Nr. 12) gelbe Flüssigkeit

Analyse:

Ti ber. 5,9%, gef. 5,5% – S ber. 7,9%, gef. 7,6%

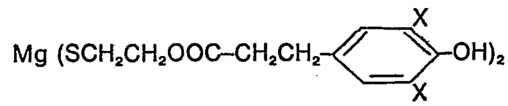

aus $Mg(OCH_3)_2$

(Verbindung Nr. 13) gelbliche Flüssigkeit

Analyse:

Mg ber. 3,5%, gef. 3,1% – S ber. 9,2%, gef. 8,8%

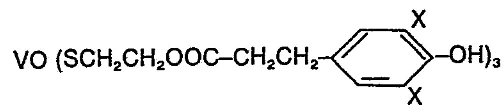

aus $VO(OC_3H_7)_3$

(Verbindung Nr. 14) glasig-spröder Feststoff

Analyse:

V ber. 4,7%, gef. 4,3% – S ber. 8,9%, gef. 8,5%.

Beispiel 4:

Thermostabilisierung von PVC

Rezeptur:

100 Teile eines handelsüblichen Suspensions-PVC vom K-Wert 60

0,2 Teile eines Montansäureesters (Wachs E, Hoechst AG)

1,0 Teil Rizinusöl

0,5 Teile Stabilisator gemäss Tabelle 1

101,7

Die Bestandteile wurden auf einem 2-Walzen-Mischwalzwerk bei 180 °C homogenisiert und dann bei 200 °C gewalzt. Alle 3 Minuten wurde eine Probe entnommen und deren Verfärbung durch Bestimmung des Yellowness-Index (ASTM D 1925-70) gemessen. Die Ergebnisse sind in Tabelle 1 zusammengestellt.

Tabelle 1

| Verwendeter Stabilisator | Yellowness Index nach | | | | | |
|---|---|---|---|---|---|---|
| | 3 Min. | 6 Min. | 9 Min. | 12 Min. | 15 Min. | 18 Min. |
| keiner | 12,6 | – | – | – | – | – |
| Verbindung Nr. 2 | 4,8 | 6,0 | 7,8 | 9,3 | 12,6 | 22,6 |
| Verbindung Nr. 7 | 10,5 | 13,3 | 16,0 | 22,7 | 97,7 | – |
| Gemisch von 0,5 Teilen Nr. 5 und 0,4 Teilen Nr. 6 | 5,0 | 8,6 | 13,4 | 44,3 | – | – |

Beispiel 5:
Thermostabilisierung von PVC

100 Teile eines handelsüblichen Suspensions-PVC vom K-Wert 60 (Vestolit S 6058, Chem. Werke Hüls A.G.) wurden mit 0,2 Teilen eines Montansäureesters (Wachs E, Hoechst A.G.) und 1,3 Teilen der Verbindung Nr. 5 bei 180° auf einer Mischwalze homogenisiert und zu 0,3 mm dicken Folien gewalzt. Die Folien wurden im Trockenschrank bei 180° gelagert. Der Yellowness-Index betrug nach 15 Min. 9,4, nach 30 Min. 11,3, nach 45 Min. 14,9 und nach 60 Min. 79,0.

Beispiel 6:
Stabilisierung von Polybutadien

100 Teile eines handelsüblichen Polybutadien (mit medium cis-Strukturen) wurden auf einem 2-Walzen-Mischwerk mit 0,2 Teilen Stabilisator bei 50 °C vermischt und bei 80 °C in einer hydraulischen Heizpresse zu 10 mm und 2 mm dicken Platten verpresst.

a) Die 10 mm dicken Platten wurden in einem Umluftofen bei 80° gealtert. Jede Woche wurde eine 5 g-Probe abgeschnitten und deren Gelgehalt bestimmt. Hierzu wurde die Probe mit 50 Teilen Toluol übergossen und bei Raumtemperatur 10 Std. geschüttelt. Die resultierende Lösung wurde über ein tariertes Drahtsieb (mit 0,044 mm Sieböffnung) filtriert, die auf dem Filter zurückbleibende Menge Gel nach dem Trocknen gewogen und auf die eingewogene Probe prozentual berechnet. Die Alterung wurde so lange fortgesetzt bis ein Gelgehalt von $>5\%$ erreicht wurde.

b) Eine genau gewogene Probe der 2 mm-Platte wurde 30 Minuten in Silikonöl (Silikonöl AK 350, Wacker-Chemie, München) bei 170° gelagert. Anschliessend wurde der Gelgehalt wie unter a) bestimmt.

Tabelle 2

| Verwendeter Stabilisator | a) Alterung bei 80° Zeit in Wochen bis zu einem Gelgehalt > 5% | b) Alterung bei 170° Gelgehalt nach 30 Minuten |
|---|---|---|
| keiner | 5 | 19,7% |
| Verbindung Nr. 5 | 10 | 3,8% |
| Verbindung Nr. 6 | 17 | 6,9% |

Beispiel 7:
Zusatz zu Schmieröl

Ein nichtlegiertes mineralisches Schmieröl wurde mit 1% der Verbindung Nr. 6 versetzt. Die Verbindung löst sich darin nach kurzem Rühren bei Raumtemperatur. Eine Vergleichsprobe wurde mit 1% Triphenylthionophosphat (einem handelsüblichen HD-Zusatz) versetzt. Die Proben wurden gemäss DIN 51350 im Shell-Vierkugel-Apparat auf folgende Eigenschaften getestet:

Weld Load (WL) = Belastung, bei der die Kugeln innerhalb von 10 Sek. zusammenschweissen (in kg).

Wear scar diameter (WSD) = mittlerer Verschleissdurchmesser (in mm) bei einer Belastung von 70 kg bzw. 40 kg während 1 Stunde.

Tabelle 3

| Ölzusatz | WL (kg) | WSD (mm) |
|---|---|---|
| keiner | 160 | 1,1 |
| 1% Verbindung Nr. 6 | 200 | 0,4 |
| 1% Triphenylthionophosphat | 165 | 0,62 |

Die Verbindung Nr. 6 zeigt in Öl ausserdem ein befriedigendes Hydrolyseverhalten und befriedigendes Kupfer- und Eisenkorrosionsverhalten.

**Patentansprüche**

1. Verbindungen der Formel I oder Ia,

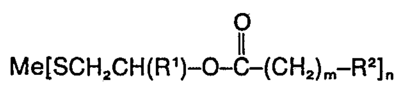 (I)

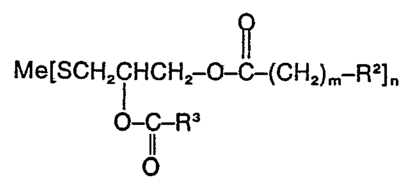 (Ia)

worin m 0, 1 oder 2 und n eine ganze Zahl von 1 bis 4 bedeutet,

$R^1$ Wasserstoff, $C_1$–$C_{10}$-Alkyl,

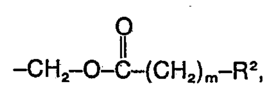, 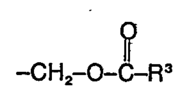

oder $-CH_2OR^4$ bedeutet,

$R^2$ eine Gruppe der Formel 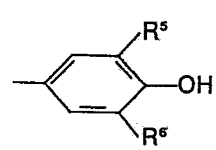

darstellt,

$R^3$ $C_1$–$C_{18}$-Alkyl, $CH_3COCH_2$–, Phenyl $COCH_2$–, Phenyl, $C_7$–$C_9$-Phenylalkyl, Vinyl oder α-Methylvinyl bedeutet,

$R^4$ $C_1$–$C_{18}$-Alkyl, Cyclohexyl oder Benzyl ist,
$R^5$ und $R^6$ $C_1$–$C_8$-Alkyl bedeuten und
Me ein n-wertiges Metall-, Oxometall-, Alkoxymetall- oder Organometall-Kation aus der 1. bis 5. Gruppe des Periodensystems ist.

2. Verbindungen gemäss Anspruch 1 der Formel I oder Ia, worin Me eines der Kationen $Mg^{2+}$, $Ca^{2+}$, $Ba^{2+}$, $Zn^{2+}$, $R^7Sn^{3+}$, $(R^7)_2Sn^{2+}$ oder $Sb^{3+}$ ist und $R^7$ $C_1$–$C_{12}$-Alkyl oder Phenyl bedeutet.

3. Verbindungen gemäss Anspruch 2 der Formel I, worin Me eines der Kationen $R^7Sn^{3+}$, $(R^7)_2Sn^{2+}$ oder $Sb^{3+}$ ist und $R^7$ die in Anspruch 2 gegebene Bedeutung hat.

4. Verbindungen gemäss Anspruch 1 der Formel I, worin $R^1$ Wasserstoff, m = 2, $R^5$ Methyl oder tert. Butyl und $R^6$ tert. Butyl sind.

5. Eine Verbindung gemäss Anspruch 1 von einer der folgenden Formeln:

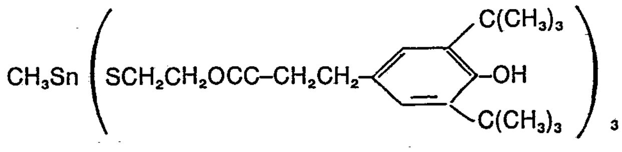

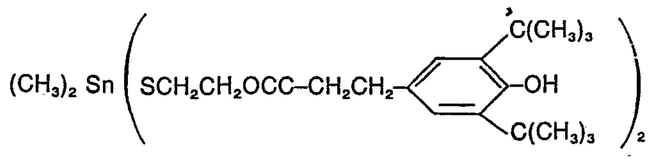

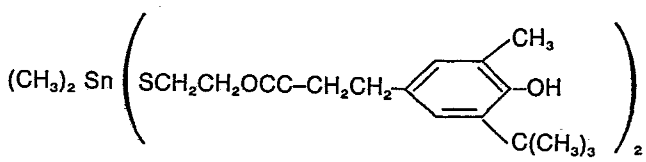

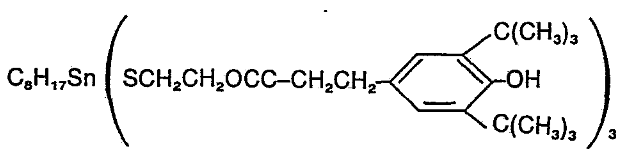

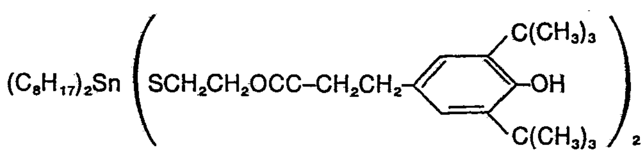

6. Verwendung der Verbindungen der Formel I oder Ia gemäss Anspruch 1 zum Stabilisieren von organischen Materialien gegen thermisch-oxydative Schädigung.

7. Verwendung gemäss Anspruch 6 zum Stabilisieren von chlorhaltigen Thermoplasten.

8. Verwendung gemäss Anspruch 6 zum Stabilisieren von Elastomeren.

9. Verwendung gemäss Anspruch 6 zum Stabilisieren von Schmiermitteln.

10. Durch Zusatz eines Stabilisators stabilisierte organische Materialien, dadurch gekennzeichnet, dass sie eine Verbindung der Formel I oder Ia gemäss Anspruch 1 enthalten.

11. Gemäss Anspruch 10 stabilisierter chlorhaltiger Thermoplast.

12. Gemäss Anspruch 11 stabilisierter chlorhaltiger Thermoplast, der als Stabilisator eine Verbindung der Formel I des Anspruches 1 enthält, worin Me ein Kation $R^7Sn^{3+}$ oder $(R^7)_2Sn^{2+}$ ist und $R^7$ die in Anspruch 2 gegebene Bedeutung hat.

13. Gemäss Anspruch 10 stabilisiertes Elastomer.

14. Gemäss Anspruch 13 stabilisiertes Elastomer, das als Stabilisator eine Verbindung der Formel I des Anspruches 1 enthält, worin Me ein Kation $R^7Sn^{3+}$ oder $(R^7)_2Sn^{2+}$ ist und $R^7$ die in Anspruch 2 gegebene Bedeutung hat.

15. Gemäss Anspruch 10 stabilisiertes Schmiermittel.

16. Gemäss Anspruch 15 stabilisiertes Schmiermittel, das eine Verbindung der Formel I des Anspruchs 1 enthält, worin Me das Kation $R^7Sn^{3+}$ darstellt.

**Claims**

1. A compound of the formula I or Ia

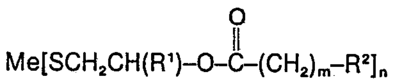

(I)

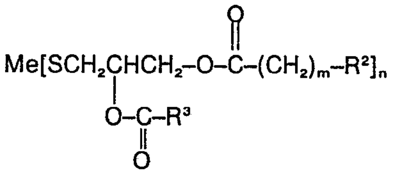

(Ia)

wherein m is 0, 1 or 2, and n is an integer from 1 to 4, $R^1$ is hydrogen, $C_1$–$C_{10}$ alkyl,

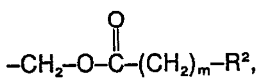

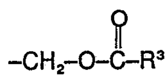

or $-CH_2OR^4$,

$R^2$ is a group of the formula 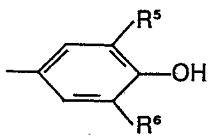

$R^3$ is $C_1$–$C_{18}$ alkyl, $CH_3COCH_2$–, phenyl $COCH_2$–, phenyl, $C_7$–$C_9$ phenylalkyl, vinyl or α-methylvinyl,
$R^4$ is $C_1$–$C_{18}$ alkyl, cyclohexyl or benzyl,
$R^5$ and $R^6$ are $C_1$–$C_8$ alkyl, and
Me is an n-valent metal, oxometal, alkoxymetal or organometal cation of the 1st to 5th group of the periodic system.

2. A compound of the formula I or Ia according to claim 1, wherein Me is a cation selected from the group consisting of: $Mg^{2+}$, $Ca^{2+}$, $Ba^{2+}$, $Zn^{2+}$, $R^7Sn^{3+}$, $(R^7)_2Sn^{2+}$ or $Sb^{3+}$, and $R^7$ is $C_1$–$C_{22}$ alkyl or phenyl.

3. A compound of the formula I according to claim 2, wherein Me is a cation selected from the group consisting of: $R^7Sn^{3+}$, $(R^7)_2Sn^{2+}$ or $Sb^{3+}$, and $R^7$ is as defined in claim 2.

4. A compound of the formula I according to claim 1, wherein $R^1$ is hydrogen, m is 2, $R^5$ is methyl or tert-butyl, and $R^6$ is tert-butyl.

5. A compound of any one of the following formulae according to claim 1:

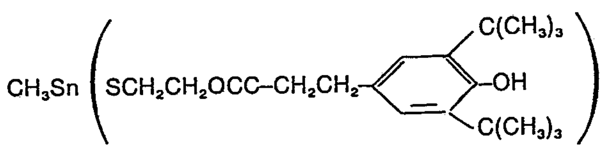

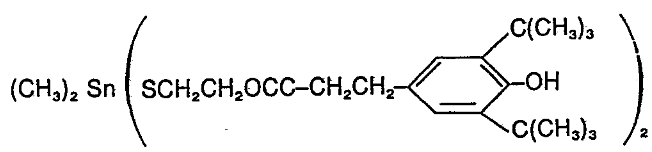

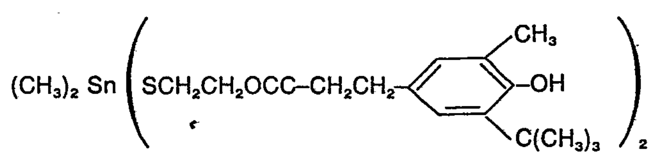

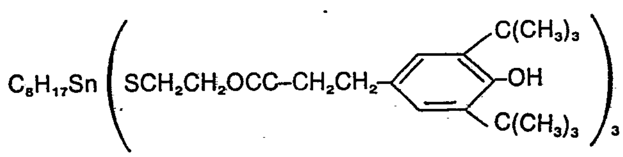

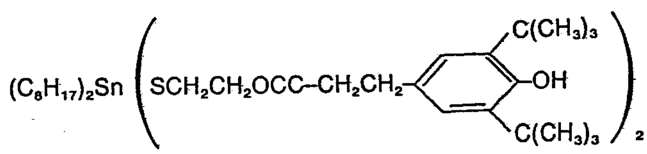

6. A method of stabilising organic material against thermo-oxidative degradation by the use of a compound of the formula I or Ia according to claim 1.

7. A method according to claim 6, wherein the material to be stabilised is a chlorinated thermoplastic.

8. A method according to claim 6, wherein the material to be stabilised is an elastomer.

9. A method according to claim 6, wherein the material to be stabilised is a lubricant.

10. An organic material stabilised by addition of a stabiliser, which material contains a compound of the formula I or Ia according to claim 1.

11. A chlorinated thermoplastic stabilised according to claim 10.

12. A chlorinated thermoplastic stabilised according to claim 11, which thermoplastic contains as stabiliser a compound of the formula I of claim 1, wherein Me is a cation $R^7Sn^{3+}$ or $(R^7)_2Sn^{2+}$, and $R^7$ is as defined in claim 2.

13. An elastomer stabilised according to claim 10.

14. An elastomer stabilised according to claim 13, which contains as stabiliser a compound of the formula I of claim 1, wherein Me is a cation $R^7Sn^{3+}$ or $(R^7)_2Sn^{2+}$, and $R^7$ is as defined in claim 2.

15. A lubricant stabilised according to claim 10.

16. A lubricant stabilised according to claim 15, which contains a compound of the formula I of claim 1, wherein Me is the cation $R^7Sn^{3+}$.

**Revendications**

1. Composés répondant à l'une des formules (I) et (Ia):

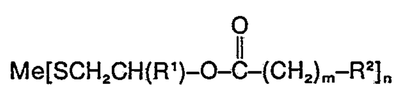
(I)

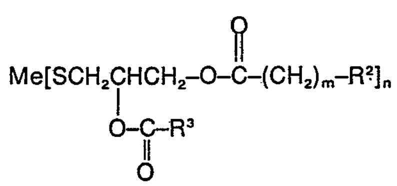
(Ia)

dans lesquelles:

m est égal à 0, à 1 ou à 2,

n représente un nombre entier de 1 à 4,

$R^1$ représente l'hydrogène, un alkyle en $C_1$–$C_{10}$ ou un radical

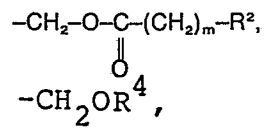 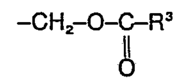

ou $-CH_2OR^4$,

$R^2$ représente un radical de formule

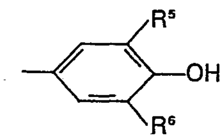

$R^3$ représente un radical alkyle en $C_1$–$C_{18}$, $CH_3COCH_2$–, phényl-$COCH_2$–, phényle, phénylalkyle en $C_7$–$C_9$, vinyle ou α-méthylvinyle,

$R^4$ représente un alkyle en $C_1$–$C_{18}$, un cyclohexyle ou un benzyle,

$R^5$ et $R^6$ représentent chacun un alkyle en $C_1$–$C_8$ et

Me représente un cation métallique, oxométallique, alcoxymétallique ou organométallique de valence égale à n, le métal en question appartenant à l'un des groupes 1 à 5 de la classification périodique.

2. Composés de formule (I) ou (Ia) selon la revendication 1, dans lesquels Me représente l'un des cations $Mg^{2+}$, $Ca^{2+}$, $Ba^{2+}$, $Zn^{2+}$, $R^7Sn^{3+}$, $(R^7)_2Sn^{2+}$ et $Sb^{3+}$, et $R^7$ représente un alkyle en $C_1$–$C_{12}$ ou un phényle.

3. Composés de formule (I) selon la revendication 2, dans lesquels Me représente l'un des cations $R^7Sn^{3+}$, $(R^7)_2Sn^{2+}$ et $Sb^{3+}$, et $R^7$ a la signification donnée à la revendication 2.

4. Composés de formule (I) selon la revendication 1, dans lesquels $R^1$ représente l'hydrogène, m est égal à 2, $R^5$ représente un radical méthyle ou tert-butyle et $R^6$ représente un radical tert-butyle.

5. Composé selon la revendication 1 pris dans l'ensemble des composés répondant aux formules suivantes:

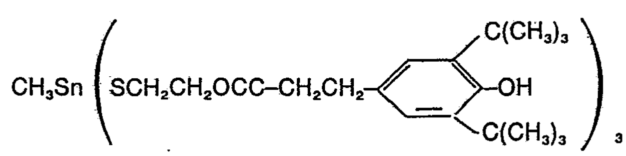

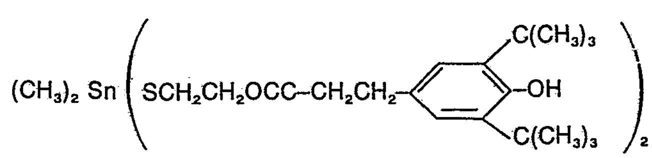

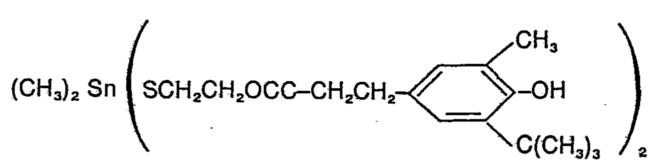

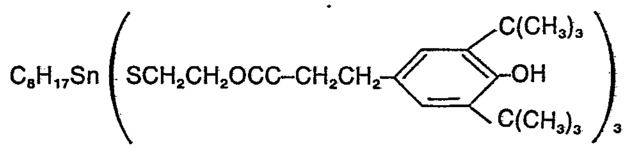

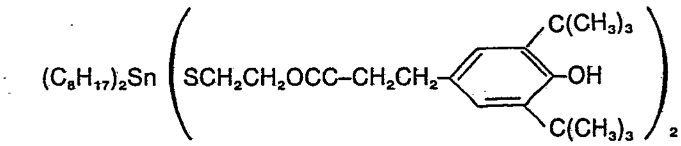

6. Application des composés de formule (I) ou (Ia) selon la revendication 1 à la stabilisation de matières organiques contre la dégradation thermo-oxydative.

7. Application selon la revendication 6, selon laquelle on stabilise des matières thermoplastiques contenant du chlore.

8. Application selon la revendication 6, selon laquelle on stabilise des élastomères.

9. Application selon la revendication 6, selon laquelle on stabilise des lubrifiants.

10. Matières organiques stabilisées par addition d'un stabilisant, caractérisées en ce qu'elles contiennent un composé de formule (I) ou (Ia) selon la revendication 1.

11. Matières thermoplastiques chlorées qui sont stabilisées selon la revendication 10.

12. Matières thermoplastiques chlorées stabilisées selon la revendication 11, qui contiennent, comme stabilisant, un composé de formule (I) selon la revendication 1 dans lequel Me représente un cation $R^7Sn^{3+}$ ou $(R^7)_2Sn^{2+}$ et $R^7$ a la signification donnée à la revendication 2.

13. Elastomères stabilisés selon la revendication 10.

14. Elastomères stabilisés selon la revendication 13, qui contiennent, comme stabilisant, un composé de formule (I) selon la revendication 1 dans lequel Me représente un cation $R^7Sn^{3+}$ ou $(R^7)_2Sn^{2+}$ et $R^7$ a la signification donnée à la revendication 2.

15. Lubrifiants stabilisés selon la revendication 10.

16. Lubrifiants stabilisés selon la revendication 15, qui contiennent un composé de formule (I) selon la revendication 1 dans lequel Me représente un cation $R^7Sn^{3+}$.